# EUROPÄISCHE PATENTSCHRIFT

(11) **EP 0 660 913 B1**
(45) Veröffentlichungstag und Bekanntmachung des Hinweises auf die Patenterteilung: **07.01.1998**
(21) Anmeldenummer: 93920716.3
(22) Anmeldetag: 14.09.1993
(51) Int. Cl.: F21Q 1/00, B60Q 1/26

(54) **SIGNALLEUCHTE**
SIGNALLING LAMP
PROJECTEUR DE SIGNALISATION

(30) Priorität: 16.09.1992 DE 4230963
(43) Veröffentlichungstag der Anmeldung: 05.07.1995
(73) Patentinhaber: ITT Automotive Europe GmbH, 60488 Frankfurt am Main (DE)
(72) Erfinder: BINDER, Peter, D-74343 Sachsenheim (DE); FEGER, Rolf, D-74321 Bietigheim-Bissingen (DE); GRYNAEUS, Peter, D-74321 Bietigheim-Bissingen (DE); HOLZMACHER, Günther, D-71679 Asperg (DE)
(86) Internationale Anmeldenummer: EP9302480
(87) Internationale Veröffentlichungsnummer: WO9407085

(56) Entgegenhaltungen:
- EP-A- 0 281 719
- GB-A- 2 079 919

## Beschreibung

Die Erfindung betrifft eine Signalleuchte, insbesondere für Kraftfahrzeuge, mit den Merkmalen des Oberbegriffs des Anspruchs 1.

Aus der EP-A 0 281 719 ist eine Fahrzeugleuchte bekannt, die im inaktiven Zustand der Leuchte in einer anderen Farbe erscheint als die Farbe des im aktiven Zustand der Leuchte abgegebenen Lichtsignales. Zu diesem Zweck sind in der Leuchtenkammer in einem Abstand hinter dem Abschlußglas eine lichtundurchlässige Scheibe mit Lichtdurchtrittsöffnungen, also eine Blende, und in einem Abstand hinter der Blende ein Lichtfilter angeordnet. Der Lichtfilter ist gleichzeitig als Optikscheibe ausgebildet. Er besitzt an seiner Rückseite konvexe Bereiche, deren Brennpunkte genau innerhalb der Blende in den Lichtdurchtrittsöffnungen liegen, um das Licht durch die Lichtdurchtrittsöffnungen hindurchzufokussieren. Die Vorderseite des Lichtfilters ist glatt, wohingegen die Rückseite des Abschlußglases konvexe Bereiche aufweist, um das hindurchtretende Licht zu verteilen. Nachteilig hierbei ist vor allem die große Bauhöhe der Leuchte in Lichtaustrittsrichtung aufgrund der erforderlichen großen Abstände zwischen dem Abschlußglas und der Blende und zwischen der Blende und dem Lichtfilter.

Aus der DE-U 85 33 666 ist eine Signalleuchte bekannt, bei der das Licht der Lichtquelle vom Reflektor parallelisiert und in Richtung auf die Optikscheibe gelenkt wird. Diese Optikscheibe ist gleichzeitig als Farbfilter ausgebildet und vermittelt dem von der Lichtquelle ausgesandten Licht die erforderliche Signalfarbe. Außerdem sind an der von der Lichtquelle abgewandten Seite der Optikscheibe lichtundurchlässige Bereiche angeordnet, die der Signalleuchte bei ausgeschalteter Lichtquelle ein im wesentlichen einheitliches und ästhetisch ansprechendes Aussehen vermitteln. Über die Optikscheibe werden die Lichtstrahlen der Lichtquelle so an den lichtundurchlässigen Bereichen vorbeigelenkt, daß das gesamte auf der einen Seite der Optikscheibe eintretende Licht auf der anderen Seite wieder austritt und die Signalleuchte über die Abschlußscheibe verläßt. Bei ausgeschalteter Lichtquelle nimmt ein Betrachter durch die in der Regel farblose Abschlußscheibe lediglich die lichtundurchlässigen Bereiche wahr, die z.B. schwarz eingefärbt sind. Ein direkter Blick auf den Farbfilter ist dadurch weitestgehend verhindert.

Aus der GB-A 2 079 919 ist eine andere Fahrzeugleuchte bekannt, deren farblose Abschlußscheibe auf der Außenseite eine lichtundurchlässige Blende mit einer Vielzahl kleiner Lichtdurchtrittsöffnungen trägt, welche von dem lichtdurchlässigen Material der Abschlußscheibe ausgefüllt sind. In einem Abstand hinter der Abschlußscheibe ist ein Farbfilter angeordenet, der den Lichtdurchtrittsöffnungen der Blende zugeordnete konvexe Bereiche an seiner Rückseite und konkave Bereiche an seiner Vorderseite aufweist. Die Rückseite der Abschlußscheibe ist in den Bereichen der Lichtdurchtrittsöffnungen der Blende mit konkaven Bereichen ausgestattet. Die konkaven und konvexen Bereiche des Lichtfilters und die konkaven Bereiche der Abschlußscheibe sind so aufeinander abgestimmt, daß das licht durch die Lichtdurchtrittsöffnungen der Blende hindurchfokussiert wird, wobei jeweils die Brennpunkte der Strahlenbündel außerhalb der Fahrzeugleuchte liegen.

Als nachteilig wird bei den beiden letztgenannten Fahrzeugleuchten angesehen, daß die Lichtverteilung an der Abschlußscheibe nicht homogen ist und insbesondere Lichtanhäufungen, wie Lichtpunkte oder Lichtbalken und dgl. auftreten.

Der Erfindung liegt daher die Aufgabe zugrunde, eine Signalleuchte der eingangs beschriebenen Art mit einer homogeneren Lichtverteilung und einer geringen Bauhöhe in Lichtaustrittsrichtung bereitzustellen.

Diese Aufgabe wird erfindungsgemäß durch eine Signalleuchte mit den Merkmalen des Anspruchs 1 gelöst. Dadurch daß zwischen den konkaven Bereichen der Optikscheibe lichtundurchlässige Bereiche angeordnet sind und daß das gesamte durch einen konkaven Bereich der Optikscheibe hindurchtretende Lichtbündel zu einem Brennpunkt kovergiert, welcher zwischen der Optikscheibe und der Abschlußscheibe liegt, kann einerseits der Abstand zwischen der Optikscheibe und der Abschlußscheibe und damit die Bauhöhe der Signalleuchte in Lichtaustrittsrichtung gering gehalten werden. Andererseits wird dadurch erreicht, daß die einzelnen Lichtbündel bereits vor dem Passieren der Abschlußscheibe divergiert werden, woraus bereits unmittelbar beim Austritt des Lichtes aus der Abschlußscheibe eine stark homogene Lichtverteilung resultiert. Außerdem ist beim Betrachten der inaktiven Signallleuchte hinter der Abschlußscheibe lediglich eine dunkle Fläche erkennbar, die ein im wesentlichen homogenes Aussehen besitzt.

Bei einer Weiterbildung ist vorgesehen, daß die konvexen und konkaven Bereiche und Ausnehmungen im Strahlengang des Lichts hintereinander liegen. Auf diese Weise werden die durch die einzelnen konvexen Bereiche der Optikscheibe hindurchtretenden Strahlenbündel optimal geführt, so daß einerseits die lichtundurchlässigen Bereiche durch Bündelung des Lichtstrahls nicht berührt werden, andererseits der gebündelte Lichtstrahl an der Abschlußscheibe wieder divergiert und dadurch eine homogene Lichtverteilung außerhalb der Abschlußscheibe erzielt wird.

Bevorzugt liegen die Brennpunkte der konkaven Bereiche und der konkaven Ausnehmungen in einer zum parallelisierten Licht paralleln Ebene. Diese definierte Anordnung der Optik gewährleistet ein exaktes Strahlenbild, welches durch geeignete Auswahl der Linsen wunschgemäß an unterschiedliche Umgebungsbedingungen, z.B. einen geneigten Einbau der Signalleuchten in ein Kraftfahrzeug, anpaßbar ist und dennoch eine homogene Lichtverteilung erhalten bleibt.

Vorzugsweise sind die Optikscheibe und die Abschlußscheibe parallel und insbesondere zur Horizontalen oder zum parallelisierten Licht geneigt, d.h. unter einem von 90° verschiedenen Winkel angeordnet. Bei dieser besonderen Ausführungsform kann dem Umstand Rechnung getragen werden, daß die Signalleuchte nicht nur mit einer vertikal ausgerichteten Abschlußscheibe ausgestaltet sein kann, sondern auch mit geneigten Abschlußscheiben, so daß die Signalleuchte optimal an die Form der Karosserie z.B. eines Kraftfahrzeugs angepaßt werden kann.

Bei einer bevorzugten Ausführungsform ist bei zum parallelisierten Licht geneigt angeordneter Optikscheibe die der Lichtquelle zugewandte Seite treppenförmig ausgebildet, wobei die einzelnen Treppenstufen orthogonal zum parallelisierten Licht angeordnet und mit den konvexen Bereichen versehen sind. Die konvexen Bereiche sind also unabhängig von der Lage der Optikscheibe stets orthogonal zur Richtung des Lichts ausgerichtet, so daß durch die Neigung der Optikscheibe keine ungewünschten Ablenkungen der einzelnen Lichtbündel eintreten sondern die gleichen optischen Eigenschaften erzielt werden, wie bei vertikal ausgerichteten Optikscheiben. Dies ist insbesondere bei extrem geneigten Karosserieoberflächen von Vorteil, wo die Signalleuchte an die Geometrie der Karosserie angepaßt sein muß.

Bevorzugt sind die konkaven Bereiche der Optikscheibe in Richtung des parallelisierten Lichts hinter den konvexen Bereichen angeordnet und liegen die Brennpunkte in einer zum parallelisierten Licht parallelen Ebene. Diese Ausgestaltung gewährleistet einen Durchtritt der Strahlenbündel durch die Optikscheibe ohne wesentliche Richtungsänderung unabhängig davon, ob die Optikscheibe vertikal oder geneigt angeordnet ist. Die aus der Optikscheibe austretenden Lichtbündel weisen dann nach wie vor die Grundrichtung auf und sind lediglich über die konvexen bzw. konkaven Bereich so abgelenkt, daß sie divergieren bzw. konvergieren.

Bevorzugt ist der Abstand der Abschlußscheibe von der Optikscheibe so gewählt, daß das gesamte durch einen konvexen Bereich der Optikscheibe hindurchtretende Lichtbündel durch die dahinter angeordnete konkave Ausnehmung der Abschlußscheibe hindurchtritt. Es ist also jedem konvexen Bereich der Optikscheibe eine konkave Ausnehmung der Abschlußscheibe zugeordnet, so daß das gesamte Strahlenbündel gezielt in die gewünschte Richtung abgelenkt werden kann. Dabei wird eine Divergenz des Strahlenbündels bevorzugt, so daß unmittelbar nach dem Austritt des divergierenden Strahlenbündels aus der Abschlußscheibe bereits eine Mischung der einzelnen Lichtstrahlen eintritt, so daß bereits hier eine Homogenisierung des austretenden Lichts beginnt.

Bei einer Weiterbildung ist vorgesehen, daß der Abstand der Abschlußscheibe von der Optikscheibe so gewählt ist, daß das gesamte durch einen konkaven Bereich der Optikscheibe hindurchtretende Lichtbündel zu einem Brennpunkt konvergiert, wobei der Brennpunkt zwischen der Optikscheibe und der Abschlußscheibe liegt. Dies hat den Vorteil, daß das Lichtbündel, welches hinter dem Brennpunkt wieder divergiert mit dieser Divergenz in die Abschlußscheibe eintritt und dort durch die konkaven Ausnehmungen noch weiter divergiert wird. Bei außerhalb der Optikscheibe und außerhalb der Abschlußscheibe liegendem Brennpunkt des Lichtbündels wird außerdem der Vorteil erzielt, daß das Lichtbündel z.B. durch Unregelmäßigkeiten, Verschmutzungen, Strukturfehler usw. der Scheiben nur sehr gering beeinflußt wird und außerdem die Scheiben durch Lichtkonzentrationen im Brennpunkt nicht beschädigt werden.

Vorteilhaft sind die konvexen und konkaven Bereiche bzw. Ausnehmungen als Linsen, insbesondere als Zylinderlinsen ausgebildet. Dies hat den Vorteil, daß die Optik einfach berechnet werden kann und auf einfache Weise z.B. im Spritzgießverfahren mit einem Kunststoffmaterial, welches klar oder insbesondere eingefärbt ist, hergestellt werden kann.

Bei einer Weiterbildung ist vorgesehen, daß die lichtundurchlässigen Bereiche streifenförmig ausgebildet sind und bei geneigter Optikscheibe in Neigungsrichtung verlaufen, insbesondere bei vertikal geneigter Scheibe in vertikaler Richtung und bei horizontaler geneigter Scheibe in horizontaler Richtung verlaufen. Durch diese Anordnung bzw. Ausrichtung der lichtundurchlässigen Bereiche bzw. der schwarzen Streifen können auch Signalleuchten mit diesen Streifen versehen werden, die stark geneigte oder gekrümmte Optikscheiben aufweisen. Unter vertikal geneigter Leuchte werden diejenigen verstanden, die bzgl. der Vertikalebene nach vorne bzw. nach hinten gekippt sind. Unter horizontal geneigten Leuchten werden diejenigen verstanden, deren Seitenrand nach vorne bzw. nach hinten verlagert ist.

Weitere Vorteile, Merkmale und Einzelheiten der Erfindung ergeben sich aus der nachfolgenden Beschreibung, in der unter Bezugnahme auf die Zeichnung zwei Ausführungsbeispiele im einzelnen dargestellt und beschrieben sind.
Dabei zeigen:
- Figur 1: einen vertikalen Schnitt durch eine erfindungsgemäße Signalleuchte;
- Figur 2: einen Ausschnitt II gemäß Fig. 1, ein erstes Ausführungsbeispiel der erfindungsgemäßen Ausgestaltung der Optikscheibe und der Abschlußscheibe zeigend;
- Figur 3: einen Ausschnitt II gemäß Fig. 1, eine weitere Ausführungsform der erfindungsgemäßen Optikscheibe und Abschlußscheibe zeigend, wobei die Neigungsrichtung bei diesem Ausführungsbeispiel anders gewählt ist.

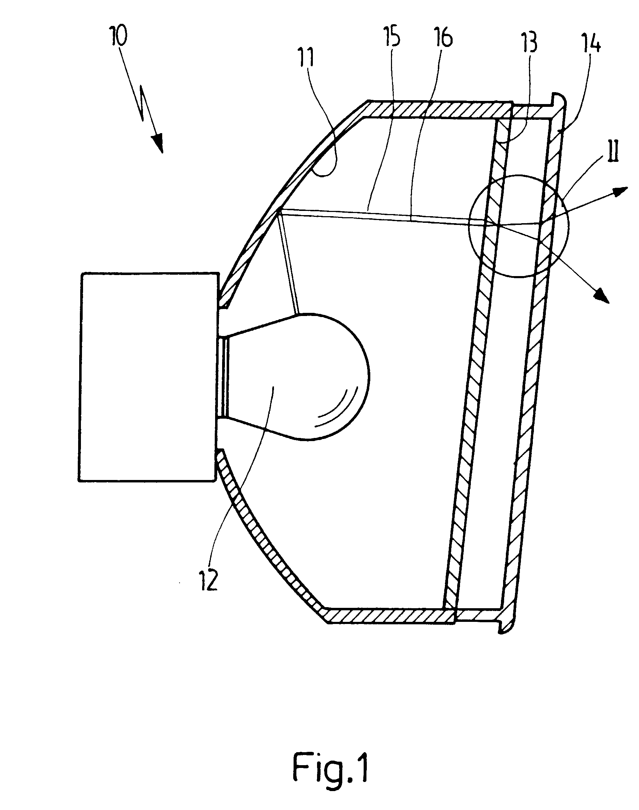

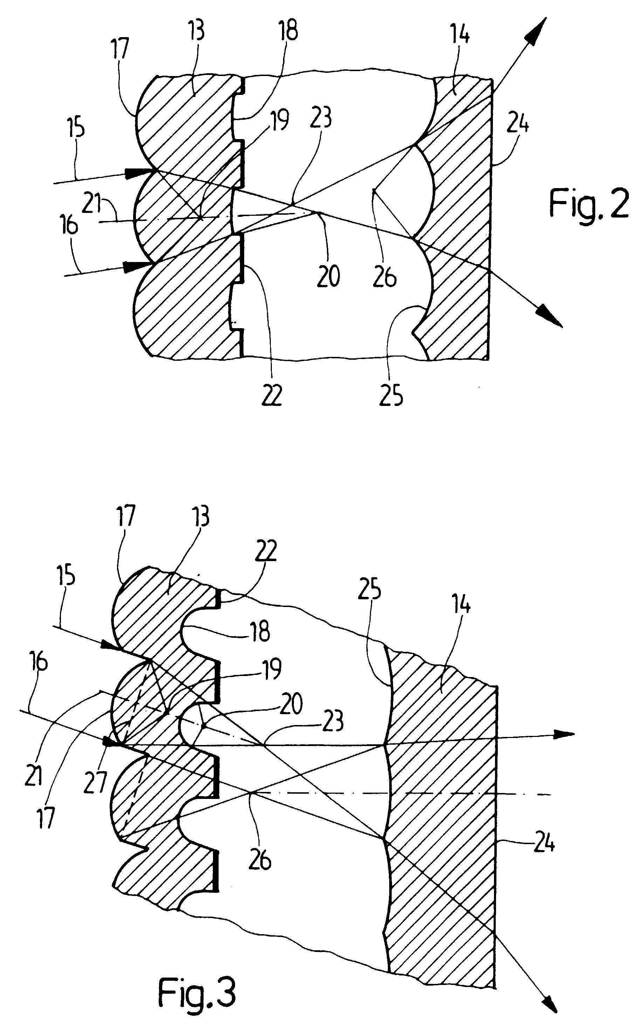

Das insgesamt mit 10 bezeichnete Gehäuse der in der Fig. 1 dargestellten Signalleuchte weist an der Innenseite einen Reflektor 11 auf, der das von einer als Lichtquelle 12 dienenden Glühlampe ausgehende Licht in paralleler Richtung ausrichtet und in Richtung auf eine Optikscheibe 13 und eine dahinter angeordnete Abschlußscheibe 14 umlenkt. Die Optikscheibe 13 und die Abschlußscheibe 14 verlaufen im wesentlichen parallel zueinander und sind gegenüber der Vertikalebene geringfügig geneigt angeordnet. Die Optikscheibe 13 ist als Farbfilter ausgebildet, die dem durchtretenden Licht die gewünschte Signalfarbe vermittelt. Die Abschlußscheibe 14 kann z.B. aus einem rosa eingefärbten oder glas klaren Material bestehen. Es ist jedoch auch denkbar, daß vor oder hinter der Optikscheibe 13 ein Farbfilter angeordnet ist. Die detailierte Ausgestaltung der Optikscheibe 13 und der Abschlußscheibe 14 ist den Fig. 2 und 3 zu entnehmen, in denen ein Ausschnitt II im einzelnen dargestellt ist.

Bei dem in der Fig. 2 dargestellten Ausführungsbeispiel sind die beiden Scheiben 13 und 14 gegenüber der Richtung der einfallenden Lichtstrahlen 15 und 16 geringfügig gekippt angeordnet, wie bereits in Fig. 1 qualitativ dargestellt. Die der in Fig. 2 nicht dargestellten Lichtquelle 12 zugewandte Seite der Optikscheibe 13 ist mit konvexen Bereichen 17 versehen, wobei die gegenüberliegende Seite konkave Bereiche 18 aufweist. Die Bereiche 17 und 18 sind als Linsen, insbesondere als Zylinderlinsen ausgebildet, deren Brennpunkte 19 und 20 auf einer Linie 21 liegen, die die Optikscheibe 13 orthogonal durchsetzt. Die konvexen Bereiche 17 bedecken lückenlos die der Lichtquelle 12 zugewandte Seite der Optikscheibe 13, wohingegen die konkaven Bereiche 18 jeweils einen Abstand zueinander aufweisen. Zwischen den einzelnen konkaven Bereichen 18 befinden sich lichtundurchlässige Bereiche 22. Diese werden z.B. von einem Farbauftrag, einer aufgewalzten Folie, einem aufgedampften Metallüberzug oder dgl. gebildet. In der Regel sind die lichtundurchlässigen Bereiche 22 streifenförmig ausgebildet, wobei die Erfindung hierauf nicht beschränkt sein soll. Die konvexen Bereiche 17 sind so ausgestaltet, daß die Grenzstrahlen 15 und 16 soweit abgelenkt werden, daß sie zwischen den lichtundurchlässigen Bereichen 22 auf die konkaven Bereiche 18 auftreffen, so daß das gesamte auf die der Lichtquelle 12 zugewandte Seite der Optikscheibe 13 auftreffende Licht die Optikscheibe 13 an ihrer Rückseite verläßt. Außerdem ist die Krümmung der konkaven Bereiche 18 so gewählt, daß das von den Grenzstrahlen 15 und 16 gebildete Lichtbündel zu einem Punkt 23 konvergiert, der zwischen den Scheiben 13 und 14 liegt. Bei als Zylinderlinsen ausgebildeten Bereichen 17 und 18 stellen die Punkte 19, 20 und 23 Linien dar.

Die Abschlußscheibe 14 ist mit einer im wesentlichen glatten Außenoberfläche 24 versehen, wohingegen die der Lichtquelle 12 zugewandte Seite konkave Ausnehmungen 25 aufweist. Diese Ausnehmungen 25 sind ebenfalls als Linsen, insbesondere als Zylinderlinsen ausgestaltet und besitzen einen Brennpunkt 26, der zwischen den beiden Scheiben 13 und 14 liegt. Die konkave Ausnehmung 25 ist dabei so auf der Abschlußscheibe 14 angeordnet und weist eine derartige Größe auf, daß das von den Grenzstrahlen 15 und 16 abgegrenzte Lichtbündel, welches hinter dem Punkt 23 divergiert, vollständig in eine einzige konkave Ausnehmung 25 trifft und von dieser abgelenkt wird. Durch die konkave Ausgestaltung der Ausnehmung 25 wird die Divergenz des Lichtbündels noch weiter erhöht, so daß das Lichtbündel am Austritt aus der Abschlußscheibe 14, d.h. an der Außenoberfläche 24 einen breiten Lichtkegel bildet. Da jeder konkaven Ausnehmung 25 ein derartig breiter Lichtkegel zugeordnet ist, wird eine hohe Durchmischung der einzelnen Lichtbündel erzielt, wodurch eine große Homogenität bereits in unmittelbarer Nähe der Außenoberfläche 24 der Abschlußscheibe 14 erzielt wird. Außerdem werden durch die große Durchmischung der einzelnen Lichtbündel einzelne Fehlstellen entweder in der Optikscheibe 13 oder in der Abschlußscheibe 14, die dem jeweiligen Bündel entweder eine geringfügig andere Farbe oder Strahlungsrichtung verleihen, von den benachbarten Strahlenbündel überstrahlt, so daß diese Fehler vom menschlichen Auge nicht wahrnehmbar sind.

Das durch die Abschlußscheibe 14 eintretende Licht trifft überwiegend auf die lichtundurchlässigen Bereiche 22 der Optikscheibe 13. Das reflektierte Licht wird dann ebenfalls über die konkaven Ausnehmungen 25 zerstreut, so daß die erfindungsgemäße Signalleuchte bei ausgeschalteter Lichtquelle ein gleichmäßiges Aussehen besitzt. Insbesondere treten die lichtundurchlässigen Bereiche 22, z.B. schwarze Streifen oder dgl., nicht so deutlich hervor, wie bei den bekannten Signalleuchten.

Bei der in der Fig. 3 wiedergegebenen Ausführungsform einer erfindungsgemäßen Signalleuchte ist die der Lichtquelle 12 zugewandte Seite der Optikscheibe 13 stufenförmig ausgebildet, wobei jede Stufe 27 mit einem konvexen Bereich 17 versehen ist. Dies hat den Vorteil, daß die durch die beiden Brennpunkte 19 und 20 der beiden Bereiche 17 und 18 gehende Linie 21 die Richtung der Strahlen 15 und 16 aufweisen kann, wodurch die gesamte Optik der Optikscheibe 13 einfacher ausgestaltet sein kann, da sie im Prinzip orthogonal zur Strahlungsrichtung liegt. Auch bei diesem Ausführungsbeispiel ist die Abschlußscheibe so angeordnet, daß das von den Lichtstrahlen 15 und 16 begrenzte Lichtbündel vollständig in eine konkave Ausnehmung 25 trifft und von dieser weiter divergiert wird. Der aus der Außenoberfläche 24 der Abschlußscheibe 14 austretende Lichtkegel ist in diesem Falle geringfügig nach unten gerichtet.

Vorteilhaft verlaufen die streifenförmigen lichtundurchlässigen Bereiche 22 in Richtung der Neigung der Optikscheibe 13 bzw. der gesamten Signalleuchte, d.h. bei vertikal geneigten Leuchten verlaufen diese in vertikaler Richtung und bei horizontal geneigten Leuchten in horizontaler Richtung. Durch diese Anordnung lassen sich die Streifen auch bei stark geneigten und gekrümmten Leuchten realisieren. Der optische Abstand der Streifen zueinander bleibt dann im wesentlichen gleich groß.

## Patentansprüche

1. Signalleuchte, insbesondere für Kraftfahrzeuge, mit einem Gehäuse (10), einer im Gehäuse (10) angeordneten Lichtquelle (12), einem Reflektor (11) zur parallelen Ausrichtung des Lichts der Lichtquelle (12), einer Abschlußscheibe (14) und einer zwischen der Lichtquelle (12) und der Abschlußscheibe (14) angeordneten Optikscheibe (13) sowie wenigstens einem im Strahlengang angeordneten Farbfilter, wobei die Optikscheibe (13) an ihrer der Lichtquelle (12) zugewandten Seite konvexe Bereiche (17) aufweist und an ihrer von der Lichtquelle (12) abgewandten Seite konkave Bereiche (18) aufweist und die der Lichtquelle (12) zugewandte Seite der Abschlußscheibe (14) konkave Ausnehmungen (25) aufweist, dadurch **gekennzeichnet**, daß zwischen den konkaven Bereichen (18) der Optikscheibe (13) lichtundurchlässige Bereiche (22) angeordnet sind und daß das gesamte durch einen konkaven Bereich (18) der Optikscheibe (13) hindurchtretende Lichtbündel zu einem Brennpunkt (23) konvergiert, welcher zwischen der Optikscheibe (13) und der Abschlußscheibe (14) liegt.

2. Signalleuchte nach Anspruch 1, dadurch gekennzeichnet, daß die konvexen und konkaven Bereiche (17 und 18) und Ausnehmungen (25) im Strahlengang des Lichts hintereinander liegen.

3. Signalleuchte nach Anspruch 1 oder 2, dadurch gekennzeichnet, daß die Brennpunkte (19 und 26) der konvexen Bereiche (17) und der konkaven Ausnehmungen (25) in einer zum parallelisierten Licht parallelen Ebene liegen.

4. Signalleuchte nach einem der vorhergehenden Ansprüche, dadurch gekennzeichnet, daß die Optikscheibe (13) und die Abschlußscheibe (14) parallel und insbesondere zur Horizontalen oder zum parallelausgerichteten Licht geneigt angeordnet sind.

5. Signalleuchte nach einem der vorhergehenden Ansprüche, dadurch gekennzeichnet, daß bei zum parallelisierten Licht geneigt angeordneter Optikscheibe (13) die der Lichtquelle (12) zugewandte Seite treppenförmig ausgebildet ist, wobei die einzelenen Treppenstufen (27) orthogonal zum parallelisierten Licht angeordnet und mit den konvexen Bereichen (17) versehen sind.

6. Signalleuchte nach Anspruch 5, dadurch gekennzeichnet, daß die konkaven Bereiche (18) in Richtung des parallelisierten Lichts hinter den konvexen Bereichen (17) angeordnet sind und die Brennpunkte (19 und 20) in einer zum parallelisierten Licht parallelen Ebene (21) liegen.

7. Signalleuchte nach einem der vorhergehenden Ansprüche, dadurch gekennzeichnet, daß der Abstand der Abschlußscheibe (14) von der Optikscheibe (13) so gewählt ist, daß das gesamte durch einen konvexen Bereich (17) der Optikscheibe (13) hindurchtretende Lichtbündel durch die dahinter angeordnete konkave Ausnehmung (25) der Abschlußscheibe (14) hindurchtritt.

8. Signalleuchte nach einem der vorhergehenden Ansprüche, dadurch gekennzeichnet, daß die konvexen und konkaven Bereiche (17 und 18) bzw. Ausnehmungen (25) als Linsen, insbesondere als Zylinderlinsen ausgebildet sind.

9. Signalleuchte, insbesondere nach einem der vorhergehenden Ansprüche, dadurch gekennzeichnet, daß die lichtundurchlässigen Bereiche (22) streifenförmig ausgebildet sind und bei geneigter Optikscheibe (13) in Neigungsrichtung verlaufen, insbesondere bei vertikal geneigter Scheibe (13) in vertikaler Richtung und bei horizontal geneigter Scheibe (13) in horizontaler Richtung verlaufen.

## Claims

1. A signal lamp, in particular, for automotive vehicles, comprising a casing (10), a light source (12) provided in the casing (10), a reflector (11) for orienting in parallel the light from the light source (12), a closure plate (14), an optical plate (13) provided between the light source (12) and the closure plate (14), and at least one colour filter disposed in the path of rays, with the optical plate (13) on the side thereof facing the light source (12) comprising convex areas (17) and on the side thereof facing away from the light source (12) comprising concave areas (18), and the side of the closure plate (14) facing the light source (12) has concave recesses (25),
characterized in that light-impermeable areas (22) are arranged between the concave areas (18) of the optical plate (13), and in that the total light ray which passes through a concave area (18) of the optical plate (13) converges to a focal point (23) which lies between the optical plate (13) and the closure plate (14).

2. A signal lamp as claimed in claim 1,
characterized in that the convex and concave areas (17 and 18) and the recesses (25) are series-arranged in the path of rays of the light.

3. A signal lamp as claimed in claim 1 or claim 2,
characterized in that the focal points (19 and 26) of the convex areas (17) and the concave recesses (25) lie in a plane parallel to the parallelized light.

4. A signal lamp as claimed in any one of the preceding claims,
characterized in that the optical plate (13) and the closure plate (14) are arranged in parallel and, in particular, at an inclination to the horizontal or to the parallel oriented light.

5. A signal lamp as claimed in any one of the preceding claims,
characterized in that, with the optical plate (13) disposed at an inclination to the parallelized light, the side facing the light source (12) is of a ladder-type configuration, with the individual steps (27) being in orthogonal relationship to the parallelized light and including convex areas (17).

6. A signal lamp as claimed in claim 5,
characterized in that the concave areas (18), in the direction of the parallelized light, are arranged behind the convex areas (17), and in that the focal points (19 and 20) lie in a plane (21) parallel to the parallelized light.

7. A signal lamp as claimed in any one of the preceding claims,
characterized in that the distance of the closure plate (14) from the optical plate (13) is selected such that the entire light bundle passing through a convex area (17) of the optical plate (13) passes through the concave recess (25) of the closure plate (14) arranged therebehind.

8. A signal lamp as claimed in any one of the preceding claims,
characterized in that the convex and concave areas (17 and 18) and recesses (25), respectively, are formed as lenses, in particular, as cylindrical lenses.

9. A signal lamp, in particular, as claimed in any one of the preceding claims,
characterized in that the light-impermeable areas (22) are of a strip-type configuration and, with the optical plate (13) inclined, extend in the direction of inclination, i.e. with a vertically inclined plate (13) they extend in the vertical direction and with a horizontally inclined plate (13) in the horizontal direction.

## Revendications

1. Feu de signalisation, en particulier pour véhicules automobiles, comportant un boîtier (10), une source de lumière (12) disposée dans le boîtier (10), un réflecteur (11) destiné à orienter la lumière émise par la source de lumière (12) de façon parallèle, un verre de protection (14) et un verre optique (13) disposé entre la source de lumière (12) et le verre de protection (14), ainsi qu'au moins un filtre de couleur disposé dans le passage des rayons, le verre optique (13) comportant, à sa face tournée vers la source de lumière (12), des sections convexes (17), et, à sa face tournée vers l'opposé de la source de lumière (12), des sections concaves (18), et la face du verre de protection (14), qui est tournée vers la source de lumière (12), comportant des évidements concaves (25),
caractérisé en ce que des sections opaques (22) sont disposées entre les zones concaves (18) du verre optique (13), et en ce que le faisceau de lumière traversant une section concave (18) du verre optique (13) converge dans son intégralité en direction d'un foyer (23) qui se situe entre le verre optique (13) et le verre de protection (14).

2. Feu de signalisation selon la revendication 1, caractérisé en ce que les sections convexes et concaves (17 et 18) et les évidements (25) sont disposés les uns derrière les autres dans le sens du passage des rayons de lumière.

3. Feu de signalisation selon la revendication 1 ou 2, caractérisé en ce que les foyers (19 et 26) des sections convexes (17) et des évidements concaves (25) se situent dans un plan parallèle à la lumière parallèle.

4. Feu de signalisation selon l'une des revendications précédentes, caractérisé en ce que le verre optique (13) et le verre de protection (14) sont disposés en parallèle, et notamment de façon inclinée par rapport à l'horizontale ou à la lumière présentant une orientation parallèle.

5. Feu de signalisation selon l'une des revendications précédentes, caractérisé en ce que, lorsque le verre optique (13) est disposé de façon inclinée par rapport à la lumière parallèle, la face tournée vers la source de lumière (12) est réalisée en forme d'escalier, les différents paliers (27) de l'escalier étant disposés de façon orthogonale par rapport à la lumière parallèle, et étant pourvues des sections convexes (17).

6. Feu de signalisation selon la revendication 5, caractérisé en ce que les sections concaves (18) sont disposées derrière les zones convexes (17), dans le sens de la lumière parallèle, et en ce que les foyers (19 et 20) se situent dans un plan (21) parallèle à la lumière parallèle.

7. Feu de signalisation selon l'une des revendications précédentes, caractérisé en ce que la distance entre le verre de protection (14) et le verre optique (13) est sélectionnée de manière telle que le faisceau de lumière traversant une section convexe (17) du verre optique (13) passe dans son intégralité aussi par l'évidement concave (25) du verre de protection, qui est situé derrière cette section.

8. Feu de signalisation selon l'une des revendications précédentes, caractérisé en ce que les zones convexes et concaves (17 et 18), voire les évidements (25), sont configurés sous forme de lentilles, et notamment sous forme de lentilles cylindriques.

9. Feu de signalisation, en particulier selon l'une des revendications précédentes, caractérisé en ce que les sections opaques (22) sont réalisées sous forme de bandes et, sur des verres optiques (13) inclinés, s'étendent dans le sens de l'inclinaison, s'étendant notamment dans le sens vertical si le verre (13) est incliné verticalement, et dans le sens horizontal si le verre (13) est incliné horizontalement.
